# EUROPÄISCHE PATENTSCHRIFT

(11) **EP 2 795 206 B1**
(45) Veröffentlichungstag und Bekanntmachung des Hinweises auf die Patenterteilung: **03.01.2018**
(21) Anmeldenummer: 12759091.7
(22) Anmeldetag: 10.09.2012
(51) Int. Cl.: F25B 5/02, F25B 27/00, F25B 49/02, F25D 29/00

(54) **KÜHLVORRICHTUNG UND VERFAHREN ZUR STEUERUNG EINER KÜHLVORRICHTUNG**
COOLING DEVICE AND METHOD FOR CONTROLLING A COOLING DEVICE
DISPOSITIF DE REFROIDISSEMENT ET PROCÉDÉ DE COMMANDE D'UN DISPOSITIF DE REFROIDISSEMENT

(30) Priorität: 20.12.2011 DE 102011121554
(43) Veröffentlichungstag der Anmeldung: 29.10.2014
(73) Patentinhaber: B Medical Systems S.à r.l., 9809 Hosingen (LU)
(72) Erfinder: PINTO, Admilson, 54298 Aach (DE); SCHRAMER, Uwe, 54666 Irrel (DE); LENTZ, Mario, B-4780 Sankt Vith (BE)
(74) Vertreter: ARC-IP
(86) Internationale Anmeldenummer: PCT/EP2012/067607
(87) Internationale Veröffentlichungsnummer: WO 2013/091914

(56) Entgegenhaltungen:
- DE-A1-102009 000 665
- US-A- 5 699 674
- US-A1- 2010 146 997

## Beschreibung

Die vorliegende Erfindung betrifft eine Kühlvorrichtung, mit wenigstens einem regenerativ betriebenen primären Kühlkreislauf, wobei der Kühlkreislauf wenigstens einen Kompressor, wenigstens einen Kondensator, wenigstens einen Verdampfer, wenigstens einen Kühlraum, wenigstens einen Temperatursensor zur Messung der Kühlraumtemperatur im Kühlraum, und eine Steuerung aufweist, wobei in der Steuerung ein Temperatursollwert des Kühlraums und ein Temperaturvergleichswert hinterlegbar sind. Ferner betrifft die vorliegende Erfindung ein Verfahren zur Steuerung einer Kühlvorrichtung.

Für gewöhnlich werden solche Kühlvorrichtungen in abgelegenen Gebieten, insbesondere in Entwicklungsländern eingesetzt, in welchen eine stabile und sichere Energieversorgung unter normalen Umständen nicht gewährleistet werden kann. Deshalb hat es sich als praktikabel herausgestellt, die für den Betrieb notwendige Energie photovoltaisch zu erzeugen, da die solare Einstrahlung in den meisten Entwicklungsländern über das gesamte Jahr ausreichend hoch ist. Somit können auch empfindliche Güter, wie beispielsweise kühlungsbedürftige medizinische Produkte oder Lebensmittel, sicher gelagert werden, wodurch die Lebensqualität der dort ansässigen Menschen verbessert werden kann.

Hierzu hat die Weltgesundheitsorganisation (World Health Organisation WHO) einen Katalog mit Mindestkriterien aufgestellt, welcher von der verwendeten Kühlvorrichtung und von der verwendeten Kühlausrüstung für den Transport und die Lagerung von medizinischen Produkten zu erfüllen ist. Hierbei ist es auch eine Vorgabe, dass die Kühltemperatur im Wesentlichen im Bereich zwischen +2 °C und +8 °C liegt, und dieser Temperaturbereich auch unabhängig von der Energieversorgung über mindestens drei Tage gehalten werden kann.

Dies deutet aber auch unmittelbar auf den größten Nachteil der photovoltaisch betriebenen Kühlvorrichtungen hin, nämlich dass eine Kühlung während der sonneneinstrahlungsfreien Zeit (z.B. Nachts oder bei Wolken) nicht möglich ist bzw. nur über eine externe Energiequelle sichergestellt werden kann. Genau letzteres ist aber in der Regel eben nicht möglich. Auch der Einsatz von Batterien ist wenig praktikabel, da diese die Anschaffungskosten deutlich erhöhen würden, eine Ersatzteilversorgung und Instandhaltung sich schwierig gestaltet und eine umweltbewusste Entsorgung der Altbatterien schier nicht zu bewerkstelligen ist. Auch ergibt sich so eine gewisse Anforderung an die Steuerung des eigentlichen Kühlungsverfahrens, da die nur limitiert zur Verfügung stehende Energie möglichst intelligent zur Kühlung eingesetzt werden muss.

Bei den aus dem Stand der Technik bekannten Lösungen wird daher auf eine hohe thermische Masse der Kühlelemente zur Speicherung der Kälte gesetzt. Hierbei läuft der Kompressor bei vorhandener Sonneneinstrahlung dauerhaft, um eine ausreichende Kälteleistung zu erzeugen. Die gespeicherte Kälte wird dann zumeist über ein Gebläse in den eigentlichen Kühlraum eingebracht, in welchem die medizinischen Produkte gelagert werden. Damit die Kühlraumtemperatur hierbei nicht unter eine Temperatur von 0 °C fällt, bei welcher es zu einer Schädigung der in der Kühlvorrichtung lagernden medizinischen Produkte kommen würde, verfügen derartige Kühlvorrichtungen über eine Heizung, die bedarfsweise Wärmeenergie zur Verfügung stellt.

Diese Systeme haben sich in langjährigen Feldtests als äußerst praktikabel herausgestellt. Jedoch wird bei diesen Systemen durch die notwendige thermische Masse zur Speicherung der Kälte die Lagerkapazität für die medizinischen Produkte entsprechend einschränkt. Des Weiteren sind eine Vielzahl an Komponenten, wie beispielsweise die Heizeinrichtung und das Gebläse, notwendig, deren Ersatzteilversorgung bzw. Wartung mitunter Probleme mit sich bringen kann. Ferner ist es auch so, dass sich ein gleichmäßiges Durchfrieren der thermischen Masse bzw. der hierzu verwendeten Kühlelemente sich nicht oder nur nach sehr langer Betriebsdauer einstellen kann.

Aus dem Stand der Technik sind Kühlvorrichtungen bekannt, bei welchen die Kühlung des Kühlraums durch die Steuerung unterbrechbar ist, und der Temperaturvergleichswert durch die Steuerung in Abhängigkeit der Zeit und/oder der Kühlraumtemperatur veränderbar ist. US 2010/ 0146997 A1 offenbart eine Kühlvorrichtung gemäß dem Oberbegriff des Anspruchs 1 und 6 sowie ein Verfahren zur Steuerung einer Kühlvorrichtung gemäß dem Oberbegriff des Anspruchs 7 und 15. Dies hat den Vorteil, dass es nicht zu einer dauerhaften Kühlleistung kommt, sondern die Kühlung unterbrochen werden kann, wenn eine gewünschte Kühlraumtemperatur erreicht ist. Dies wird durch einen Vergleich des Temperaturvergleichswerts mit der Kühlraumtemperatur erreicht. Wenn nach einer gewissen Zeit noch Energie zur Verfügung steht bzw. die gewünschte Temperatur noch nicht erreicht ist, kann die Steuerung den Temperaturvergleichswert reduzieren, sodass eine weitere Kühlung des Kühlraums bzw. der verwendeten Kühlelemente erfolgt. Um hier nicht in einen kritischen Bereich zu kommen, in welchem eine Schädigung des gekühlten Guts zu erwarten ist, wird eine Unterbrechung der Kühlung auch in Abhängigkeit der tatsächlichen Kühlraumtemperatur ermöglicht. Somit erfolgt also bei vorhandener Energie eine Kühlung, die jedoch unterbrochen wird, sobald eine Schädigung des gekühlten Guts durch zu tiefe Temperaturen zu erwarten ist.

In der DE 10 2010 055 903 A1 ist ein System offenbart, das eine Energiequelle und ein Kühlgerät in einer Haushaltsumgebung miteinander verknüpft. Der Energieverbrauch des Kühlgeräts wird entsprechend eines Signals aus einer Steuereinheit geregelt.

In der US 2006/0260335 A1 wird ein Kühlschrank offenbart, der je nach Bedarf entweder mit Wechselstrom aus einer Wechselstromquelle oder mit Gleichstrom aus einer Batterie betrieben werden kann.

Ausgehend vom Stand der Technik ist es Aufgabe der vorliegenden Erfindung, eine verbesserte Kühlvorrichtung aufzuzeigen, bei welcher die oben genannten Kriterien der WHO eingehalten werden können, wobei eine ausreichende Lagerkapazität der Kühlvorrichtung bei Verzicht auf eine zusätzliche Heizung zur Verfügung gestellt werden kann und ein gleichmäßiges und vollständiges Durchfrieren der verwendeten Kühlelemente gewährleistet wird. Ferner ist es Aufgabe der vorliegenden Erfindung, ein Verfahren zur Steuerung einer solchen Kühlvorrichtung aufzuzeigen. Die Lösung der Aufgabe gelingt mit einer Kühlvorrichtung gemäß Anspruch 1 und einem Verfahren zur Steuerung einer Kühlvorrichtung gemäß Anspruch 7. Vorteilhafte Weiterbildungen werden in den Unteransprüchen beschrieben. Somit wird eine zu starke Abkühlung bzw. eine zu starke Erwärmung des Kühlraums verhindert. Mit anderen Worten oszilliert die tatsächliche Kühlraumtemperatur um den Temperaturvergleichswert, wobei die Schwankungen dem Hysteresenwert entsprechen. Dadurch kann auch einem verzögerten Ansprechen des Kühlkreislaufs bzw. des Kompressors Rechnung getragen werden.

Es kann vorteilhaft sein, wenn die Kühlvorrichtung einen zweiten Kühlkreislauf mit einem zweiten Kompressor zur Kühlung eines zweiten Kühlraums aufweist, wobei der zweite Kompressor über einen Schalter mit Energie versorgbar ist. Somit kann bei einem weiteren Überschuss an Energie ein zweiter Kühlkreislauf zur Kühlung eines weiteren Kühlraums verwendet werden. Der zweite Kühlraum kann beispielsweise einen Pufferspeicher aufweisen oder auch ein Gefrierfach sein.

Zweckmäßigerweise weist die Kühlvorrichtung eine Zusatzschaltung auf, wobei die Steuerung über die Zusatzschaltung mit Energie versorgt werden kann. Damit ist die Energieversorgung der Steuerung unabhängig von der Energieversorgung des Kühlkreislaufs.

Hierbei ist es vorteilhaft, wenn die Zusatzschaltung einen Gleichstromwandler aufweist. Dadurch kann auch bei einem Spannungsabfall bei der Eingangsspannung eine konstante Ausgangsspannung aufrechterhalten werden. Dies verhindert eine Abschaltung der Steuerung auch bei einem Spannungsabfall, der beispielsweise durch den Einschaltvorgang des Kompressors bedingt sein kann.

Es ist zweckmäßig, wenn die Zusatzschaltung wenigstens einen Kondensator aufweist. Dadurch kann die Steuerung auch dann mit Energie versorgt werden, wenn tatsächlich keine Energie mehr zur Verfügung steht, beispielsweise bei einer durch Wolken bedingten sonneneinstrahlungsfreien Zeit.

Verfahrensseitig gelingt die Lösung der Aufgabe gemäß Anspruch 7. Hintergrund hierbei ist es, dass ein Nichterreichen des Temperatursollwerts innerhalb des vorgegebenen Zeitraums auch auf eine relative hohe Anfangs- bzw. Außentemperatur hindeutete, sodass der Kühlraum zweckmäßigerweise stärker und über einen längeren Zeitraum gekühlt wird, sodass die verwendeten Kühlelemente auch vollständig durchfrieren. Hierbei ist darauf zu achten, dass der Korrekturwert nicht so groß gewählt wird, dass die Temperatur im Kühlraum unter einen kritischen Bereich fällt, in welchem es zu einer Schädigung des gekühlten Guts kommen kann.

Erfindungsgemäß wird der Kompressor beim Unterschreiten des Temperaturvergleichswerts durch die tatsächliche Kühlraumtemperatur um einen Hysteresenwert abgeschaltet und beim Überschreiten des Temperaturvergleichswerts durch die tatsächliche Kühlraumtemperatur um den Hysteresenwert angeschaltet. Somit wird eine zu starke Abkühlung bzw. eine zu starke Erwärmung des Kühlraums verhindert. Mit anderen Worten oszilliert die tatsächliche Kühlraumtemperatur um den Temperaturvergleichswert, wobei die Schwankungen dem Hysteresenwert entsprechen. Dadurch kann auch einem verzögerten Ansprechen des Kühlkreislaufs bzw. des Kompressors Rechnung getragen werden.

Zweckmäßigerweise wird der Temperaturvergleichswert schrittweise um einen Betrag des hinterlegten Korrekturwerts angehoben, bis der Temperaturvergleichswert dem Temperatursollwert entspricht, wobei der Temperaturvergleichswert bei einer Abschaltung des Kompressors um den nächsten Schritt erhöht wird. Dadurch wird gewährleistet, dass der Kompressor so lange wie möglich läuft und die zur Kühlung des Kühlraums verwendeten Kühlelemente komplett durchgefroren sind, bevor der Temperatursollwert erreicht wird. Die Lösung der Aufgabe gelingt ebenso mit einer Kühlvorrichtung gemäß Anspruch 6 und einem Verfahren zur Steuerung einer Kühlvorrichtung gemäß Anspruch 15. In der erfindungsgemäßen Kühlvorrichtung gemäß Anspruch 6 weist der primäre Kühlkreislauf einen Extra-Kühlraum und wenigstens einen dem Extra-Kühlraum zugeordneten Extra-Verdampfer auf. Der Extra-Verdampfer ist über ein Ventil am primären Kühlkreislauf angeschlossen, und die Kühlung des Kühlraums ist durch Schaltung des Ventils unterbrechbar. Somit kann bei vorhandener Energie trotz bereits ausreichend tiefer Temperaturen im Kühlraum eine weitere Kühlung erfolgen. Denkbar ist hier, dass der Extra-Kühlraum einen Pufferspeicher aufweist, mit welchem der Kühlraum bei nicht vorhandener Energie gekühlt werden kann. Alternativ kann der Extra-Kühlraum auch ein Gefrierfach zur Kühlung von Eisbeuteln oder dergleichen sein. Letztere können zum Transport der medizinischen Produkte über kurze Strecken verwendet werden. Erfindungsgemäß wird das Ventil beim Unterschreiten des Temperaturvergleichswerts durch die tatsächliche Kühlraumtemperatur um einen Hysteresenwert geschaltet wird und das Ventil beim Überschreiten des Temperaturvergleichswerts durch die tatsächliche Kühlraumtemperatur um den Hysteresenwert geschaltet wird. Das bedeutet, dass durch Schaltung des Ventils der Extra-Kühlraum durch den Extra-Verdampfer solange gekühlt wird, bis das Ventil wieder schaltet und wieder eine Kühlung des Kühlraums durch den Verdampfer erfolgt. Dies hat den Vorteil, dass der Kompressor ununterbrochen läuft und in Phasen in denen der Kühlraum nicht gekühlt werden muss, der Extra-Kühlraum gekühlt wird. Zudem wird erfindungsgemäß der Temperaturvergleichswert schrittweise um einen Betrag des hinterlegten Korrekturwerts angehoben, bis der Temperaturvergleichswert dem Temperatursollwert entspricht, wobei der Temperaturvergleichswert bei einer Schaltung des Ventils um den nächsten Schritt erhöht wird. Dadurch wird gewährleistet, dass die Kompressorlaufzeit maximal ist und möglichst viel Kälte gespeichert werden kann.

Ferner ist es als vorteilhaft anzusehen, dass der zweite Kompressor mit Energie versorgt wird, wenn der Kompressor des primären Kühlkreislaufs abgeschaltet ist. Wenn ausreichend Energie zur Verfügung steht, ist es insbesondere zweckmäßig wenn der Kompressor des primären Kühlkreislaufs und der zweite Kompressor simultan mit Energie versorgt werden. So kann eine maximale Kälteausbeute aus der zur Verfügung stehenden Energie erreicht werden. Zweckmäßigerweise wird die Ausgangsspannung der der Zusatzschaltung durch den Gleichstromwandler unabhängig von der Eingangsspannung konstant gehalten. Somit schaltet die Steuerung nicht ab, wenn die Eingangsspannung beispielsweise durch den Einschaltvorgang des Kompressors kurzzeitig abfällt. Dies ist insbesondere dann der Fall, wenn kurzzeitig zu wenig Energie, beispielsweise durch eine Wolke, zur Verfügung steht und der Kompressor deswegen abschaltet. Somit ergibt sich der Vorteil, dass der in der Steuerung hinterlegte und unter Umständen bereits reduzierte oder angehobene aktuell gültige Temperaturvergleichswert nicht verlorengeht. Ferner ist so auch gewährleistet, dass die bereits abgelaufene Zeit des vorgegebenen Zeitraums bis zur Reduzierung des Temperaturvergleichswerts erhalten bleibt. Andernfalls würde dies dazu führen, dass diese Zeitspanne nach Abschaltung der Steuerung jedes Mal neu zu laufen beginnt. Es kann somit also verhindert werden, dass der Temperatursollwert erreicht wird, bevor die Kühlelemente vollständig durchgefroren sind.

Es ist von Vorteil, wenn eine Abschaltung der Steuerung über einen kritischen Zeitraum durch den wenigstens einen Kondensator der Zusatzschaltung verhindert wird. Als kritischer Zeitraum kann hier der Zeitraum verstanden werden, bei dem trotz Sonneneinstrahlung, d.h. tagsüber, keine Energie zur Verfügung steht. Dies ist insbesondere durch Wolken oder vor dem Solarmodul stehende Tiere oder Fahrzeuge der Fall. Die Kapazität des wenigstens einen Kondensators sollte so gewählt werden, dass ein normalerweise zu erwartender kritischer Zeitraum überbrückt werden kann.

Es kann als vorteilhaft angesehen werden, wenn beim Anschalten der Steuerung der Temperaturvergleichswert auf den Temperatursollwert gesetzt wird.

Nachfolgend wird die Erfindung anhand von in den Figuren dargestellten Ausführungsbeispielen näher erläutert. Darin zeigen schematisch:
- Fig.1: eine Prinzipskizze des Aufbaus der erfindungsgemäßen Kühlvorrichtung;
- Fig. 2: ein Verfahrensbild einer erfindungsgemäßen Kühlvorrichtung mit einem primären Kühlkreislauf und einem zweiten Kühlkreislauf;
- Fig. 3: ein Zeitdiagramm für die Kühlraumtemperatur, für den Temperaturvergleichswert und die Kompressorlaufzeit für eine Kühlvorrichtung mit einem primären Kühlkreislauf ab Inbetriebnahme;
- Fig.4: ein Zeitdiagramm für die Kühlraumtemperatur, für den Temperaturvergleichswert und die Kompressorlaufzeit für eine Kühlvorrichtung mit einem primären Kühlkreislauf nach der Inbetriebnahme; und
- Fig. 5: ein Zeitdiagramm für die Kühlraumtemperatur, für den Temperaturvergleichswert, die Kompressorlaufzeit und die Ventilstellung für eine Kühlvorrichtung mit einem primären Kühlkreislauf mit zwei Verdampfern.

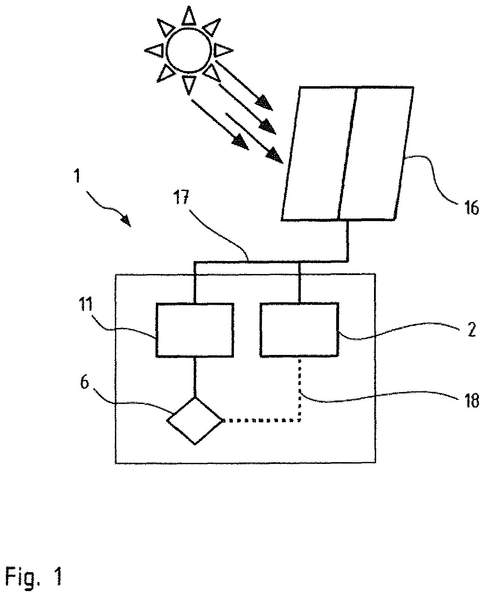

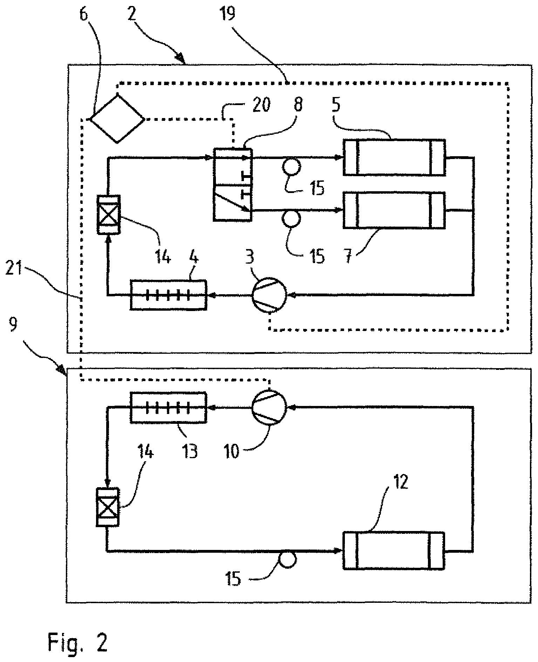

Fig. 1 zeigt eine Skizze des prinzipiellen Aufbaus der erfindungsgemäßen Kühlvorrichtung 1. Die dargestellte Kühlvorrichtung 1 weist einen primären Kühlkreislauf 2 (siehe hierzu Fig. 2), eine Steuerung 6 und eine Zusatzschaltung 11 auf. Die Steuerung 6 ist über Steuerleitungen 18 mit verschiedenen Komponenten des Kühlkreislaufs 2 verbunden. Das dargestellte Kühlsystem 1 wird regenerativ mit Energie versorgt, indem ein Solarmodul 16 das Licht der Sonne in elektrische Energie umwandelt. Die Energieversorgung erfolgt dann über die Leitungen 17, wobei die Steuerung 6 unabhängig vom restlichen Kühlkreislauf 2 über die Zusatzschaltung 11 mit Energie versorgt wird. Hierzu weist die Zusatzschaltung 11 einen (nicht dargestellten) Gleichstromwandler und eine Mehrzahl von (nicht dargestellten) Kondensatoren auf, um die Ausgangspannung zur Versorgung der Steuerung 6 auch bei einem Abfall der Eingangsspannung aufrechtzuerhalten. Die Kondensatoren ermöglichen auch eine Energieversorgung der Steuerung 6, wenn die Einstrahlung der Sonne nicht ausreichend Energie zum Betrieb zur Verfügung stellt. Insbesondere soll durch die Kondensatoren so beispielsweise eine längere Wolkenperiode oder dergleichen überbrückt werden können.

In Fig. 2 ist ein Verfahrensbild einer erfindungsgemäßen Kühlvorrichtung mit einem primären Kühlkreislauf 2 und einem zweiten Kühlkreislauf 9 dargestellt. Der primäre Kühlkreislauf 2 besteht aus einem Kompressor 3, einem Kondensator 4, einem Filtertrockner 14 sowie zwei Verdampfern 5, 7, die über ein Ventil 8 am Kühlkreislauf 2 angeschlossen sind. Zwischen dem Ventil 8 und den Verdampfern 5, 7 ist jeweils eine Drossel 15 angeordnet. Über den Verdampfer 5 wird der (nicht dargestellte) Kühlraum gekühlt, und über den Extra-Verdampfer 7 wird der (nicht dargestellte) Extra-Kühlraum gekühlt. Letzterer kann beispielsweise ein Pufferspeicher oder auch ein Gefrierfach sein. Die Steuerung 6 ist über eine erste Steuerleitung 19 mit dem Kompressor 3 verbunden, sodass der Kompressor 3 von der Steuerung ein- und ausgeschaltet werden kann. Das Ventil 8 - welches insbesondere ein 3-Wege-Magnetventil ist - ist über eine zweite Steuerleitung 20 mit der Steuerung 6 verbunden, sodass die Steuerung 6 den Kühlkreislauf entweder auf den Verdampfer 5 oder auf den Extra-Verdampfer 7 schalten kann. Mit anderen Worten kann durch Schaltung des Ventils 8 durch die Steuerung 6 entschieden werden, ob der Kühlraum oder der Extra-Kühlraum gekühlt werden soll. Hierzu wird durch die Steuerung 6 über Temperatursensoren die tatsächliche Temperatur in den Kühlräumen erfasst, um so eine optimale Kühlung zu erhalten.

Des Weiteren ist in Fig. 2 ein zweiter Kühlkreislauf 9 mit einem zweiten Kompressor 10, einem zweiten Kondensator 13, einem Filtertrockner 14 und einem zweiten Verdampfer 12 dargestellt. Vor dem zweiten Verdampfer 12 ist eine Drossel 15 angeordnet. Dieser zweite Kühlkreislauf 9 wird zur Kühlung eines zweiten (nicht dargestellten) Kühlraums verwendet, der beispielsweise ein Pufferspeicher oder ein Gefrierfach sein kann. Der zweite Kompressor 10 ist über eine dritte Steuerleitung 21 mit der Steuerung 6 verbunden, sodass der zweite Kompressor 10 durch die Steuerung 6 ein- und ausgeschaltet werden kann. Die Steuerung 6 kann also in dem in Fig. 2 dargestellten Ausführungsbeispiel die Kühlung von insgesamt drei Kühlräumen durch Ein- und Ausschalten der Kompressoren 3, 10 und/ oder durch Schalten des Ventils 8 regeln.

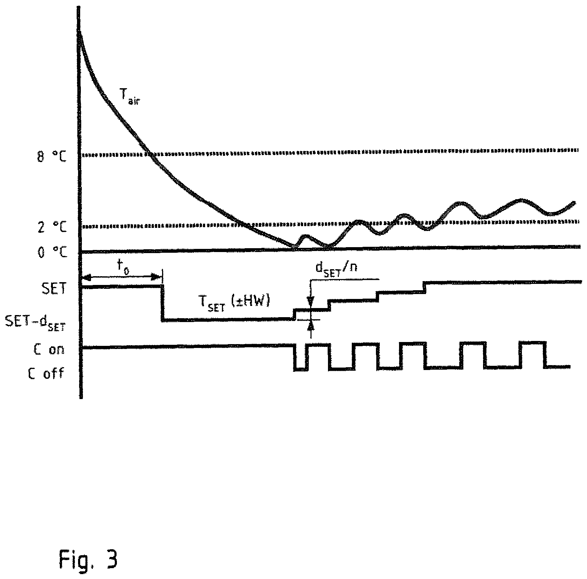

Fig. 3 zeigt ein Zeitdiagramm für die Kühlung einer Kühlvorrichtung, mit einem primären Kühlkreislauf und einem Kühlraum bei Inbetriebnahme der Kühlvorrichtung. Bei Aufstellung der Kühlvorrichtung entspricht die Temperatur im Kühlraum Tₐᵢᵣ der Umgebungstemperatur. Sobald die Kühlvorrichtung in Betrieb genommen wird schaltet die Steuerung den Kompressor an (C on) und der Kühlkreislauf beginnt den Kühlraum zu kühlen, wodurch die Kühlraumtemperatur Tₐᵢᵣ sinkt.

Hierzu sind in der Steuerung ein Temperatursollwert SET, ein Temperaturvergleichswert T_{SET} und ein Hysteresenwert HW hinterlegt. Bei Inbetriebnahme entspricht der Temperaturvergleichswert T_{SET} dem Temperatursollwert SET. Ferner misst die Steuerung über einen Temperatursensor die Temperatur im Kühlraum Tₐᵢᵣ und gleicht diese mit dem Temperaturvergleichswert T_{SET} ab. Wenn die Temperatur im Kühlraum Tₐᵢᵣ nach einem vorgegebenen Zeitraum t₀ noch nicht den Temperaturvergleichswert T_{SET} erreicht hat, reduziert die Steuerung den Temperaturvergleichswert T_{SET} um einen hinterlegten Korrekturwert D_{SET}. Der hinterlegte Korrekturwert d_{SET} ist so gewählt, dass es nicht zu einer Reduzierung des Temperaturvergleichswerts T_{SET} unter 0 °C kommt. Die Kühlung des Kühlraums wird nun solange fortgesetzt, bis die Temperatur im Kühlraum Tₐᵢᵣ den nun reduzierten Temperaturvergleichswert T_{SET} abzüglich des Hysteresenwerts HW erreicht hat. Die Steuerung schaltet den Kompressor aus (C off). Als nächstes wird der Temperaturvergleichswert T_{SET} schrittweise angehoben. Jede Anhebung des Temperaturvergleichswerts T_{SET} in n Schritten entspricht hierbei dem n-ten Teil des Korrekturwerts d_{SET}. Da jetzt keine Kühlung erfolgt, steigt die Temperatur im Kühlraum Tₐᵢᵣ an. Sobald die Temperatur im Kühlraum den nun um d_{SET}/n angehobenen Temperaturvergleichswert T_{SET} zuzüglich des Hysteresenwerts HW erreicht hat, wird der Kompressor wieder angeschaltet (C on) und der Kühlraum wird wieder gekühlt. Die Temperatur im Kühlraum Tₐᵢᵣ sinkt. Wenn diese nun den Temperaturvergleichswert T_{SET} abzüglich des Hysteresenwerts HW erreicht hat, wird der Kompressor wieder ausgeschaltet (C off) und der Temperaturvergleichswert T_{SET} um den nächsten Betrag d_{SET}/n angehoben. Dieser Vorgang wiederholt sich nun, bis der Temperaturvergleichswert T_{SET} wieder dem Temperatursollwert SET entspricht. Da die Steuerung eine unabhängige Energieversorgung vom Kompressor hat, wird auch bei einer kurzzeitigen Abschaltung des Kompressors durch fehlende Solareinstrahlung der Zyklus nicht jedes Mal neu gestartet, sondern an der Stelle der Unterbrechung fortgefahren. Sollte am Ende des Solarzyklus, also bei Einbruch der Nacht, nicht alle n Schritte vollendet worden sein, dann wird der Temperaturvergleichswert T_{SET} dennoch für den nächsten Solarzyklus zurück auf den Temperatursollwert SET gesetzt. Dadurch wird die Kompressorlaufzeit maximiert und gewährleistet, dass die Kühlelemente vollständig und homogen durchfrieren.

Im Folgenden wird die Funktionsweise anhand eines Zahlenbeispiels näher erläutert. Hierbei sind

| | |
|---|---|
| Kühlraumtemperatur bei Inbetriebnahme Tₐᵢᵣ: | 30 °C |
| Temperatursollwert SET: | 5 °C |
| Temperaturvergleichswert bei Inbetriebnahme T_{SET}: | 5 °C |
| Korrekturwert d_{SET}: | 2 °C |
| Hysteresenwert HW: | 0.1 °C |
| Anzahl der Schritte n: | 4 |
| vorgegebene Zeitperiode t₀: | 6 h |

Bei Inbetriebnahme der Kühlvorrichtung wird der Kompressor eingeschaltet und die Kühlraumtemperatur Tₐᵢᵣ von 30 °C beginnt zu sinken. Wenn nach 6 h die Kühlraumtemperatur Tₐᵢᵣ z. B. 9 °C beträgt, und somit größer ist als der Temperaturvergleichswert T_{SET} von 5° C, wird der Temperaturvergleichswert T_{SET} um den Korrekturwert d_{SET} auf 3 °C reduziert. Sobald die Kühlraumtemperatur Tₐᵢᵣ nun einen Wert von 2.9 °C erreicht hat (T_{SET} - HW = 3 °C - 0.1 °C), wird der Kompressor abgeschaltet und der Temperaturvergleichswert um 0.5 °C (d_{SET}/n = 2 °C/4) auf 3.5 °C erhöht. Die Kühlraumtemperatur Tₐᵢᵣ beginnt zu steigen. Sobald die Kühlraumtemperatur Tₐᵢᵣ einen Wert von 3.6 °C (T_{SET} + HW = 3.5 °C + 0.1 °C) erreicht hat, wird der Kompressor wieder angeschaltet und die Kühlraumtemperatur Tₐᵢᵣ sinkt wieder. Wenn die Kühlraumtemperatur 3.4 °C (T_{SET} - HW = 3.5 °C - 0.1 °C) erreicht hat, wird der Kompressor wieder ausgeschaltet und der Temperaturvergleichswert wird auf 4 °C erhöht (T_{SET} + d_{SET}/n = 3.5 °C + 2 °C/4). Dieser Ablauf wiederholt sich insgesamt n = 4-mal, bis der Temperaturvergleichswert T_{SET} wieder dem Temperatursollwert SET von 5°C entspricht. Dann wird der Kompressor bei einer Temperatur im Kühlraum Tₐᵢᵣ von 5.1 °C (set + HW = 5°C + 0.1 °C) eingeschaltet und bei einer Kühlraumtemperatur von 4.9 °C (T_{SET} - HW = 5°C - 0.1 °C) ausgeschaltet.

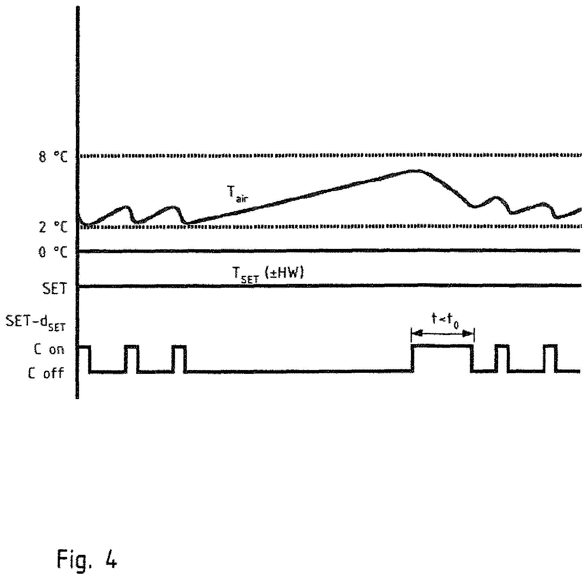

In Fig. 4 ist ein Zeitdiagramm dargestellt, welches das Zeitdiagramm aus Fig. 3 fortsetzt. In dieser Darstellung ist der Temperaturvergleichswert T_{SET} bereist wieder mit Temperatursollwert SET identisch und der Kompressor wird wie oben dargelegt an- und ausgeschaltet. Die Temperatur im Kühlraum Tₐᵢᵣ oszilliert um den Temperaturvergleichswert T_{SET}. Wenn es nun zu einer längeren Unterbrechung der Energieversorgung kommt, beispielsweise in der Nacht, wird der Kompressor abgeschaltet (C off) und die Temperatur im Kühlraum Tₐᵢᵣ steigt an. Sobald wieder Energie zur Verfügung steht wird der Kompressor angeschaltet (C on) und der in Fig. 3 beschriebene Zyklus beginnt erneut. Der Temperaturvergleichswert T_{SET} entspricht dem Temperatursollwert SET. Die Kühlraumtemperatur Tₐᵢᵣ erreicht den Temperaturvergleichswert T_{SET} innerhalb der Zeit t, wobei diese Zeitspanne t kleiner ist als der vorgegebene Zeitraum t₀. Somit wird der Temperaturvergleichswert T_{SET} nicht um den Korrekturwert d_{SET} reduziert, sondern bleibt mit dem Temperatursollwert SET identisch.

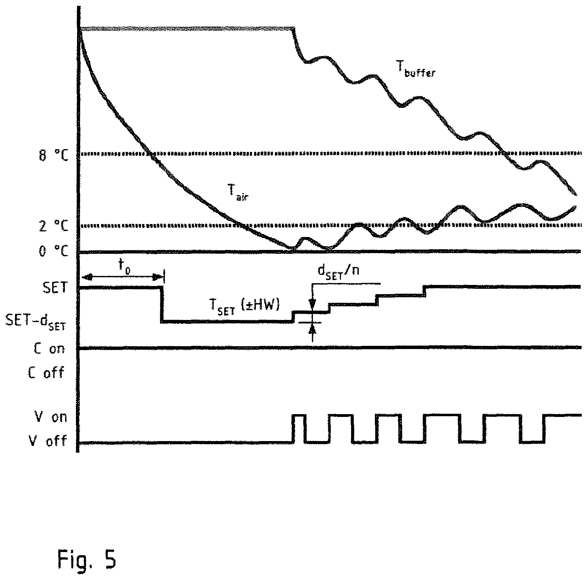

Fig. 5 zeigt prinzipiell das gleiche Zeitdiagramm wie in Fig. 3, wobei in diesem Beispiel zusätzlich ein über ein Ventil (V) ansteuerbarer Extra-Verdampfer und ein Extra-Kühlraum vorgesehen sind. Der Temperatur des Extra-Kühlraum T_{buffer} entspricht bei Inbetriebnahme der Umgebungstemperatur und somit der Kühlraumtemperatur Tₐᵢᵣ. Im Unterschied zu dem im Fig. 3 dargestellten Zeitdiagramm wird in diesem Beispiel nicht der Kompressor ausgeschaltet, wenn die Kühlraumtemperatur Tₐᵢᵣ dem Temperaturvergleichswert T_{SET} entspricht, sondern das Ventil so geschaltet, dass eine Kühlung des Extra-Kühlraums erfolgt (V on) und die Temperatur im Extra-Kühlraum T_{buffer} sinkt. Bei einer Schaltung des Ventils erfolgt auch die schrittweise Anhebung der Temperaturvergleichswerts T_{SET} um den n-Teil des Korrekturwerts d_{SET}. Sobald die Temperatur im Kühlraum Tₐᵢᵣ den nun angehobenen Temperaturvergleichswert T_{SET} zuzüglich dem Hysteresenwert HW entspricht, wird das Ventil wieder geschaltet (V off) und eine Kühlung des Kühlraums erfolgt, wodurch die Kühlraumtemperatur Tₐᵢᵣ wieder sinkt. Das Ventil wird erst wieder geschaltet, wenn die Kühlraumtemperatur Tₐᵢᵣ den Temperaturvergleichswert T_{SET} abzüglich des Hysteresenwerts HW erreicht hat. Dieser Vorgang wird dann insgesamt n-mal wiederholt, bis der Temperaturvergleichswert T_{SET} wieder dem Temperatursollwert SET entspricht. Wie man in diesem Beispiel gut erkennen kann, wird der Kompressor während des gesamten Zyklus nicht ausgeschaltet, sondern bleibt dauerhaft angeschaltet (C on).

### Bezugszeichenliste

- 1: Kühlvorrichtung
- 2: primärer Kühlkreislauf
- 3: Kompressor
- 4: Kondensator
- 5: Verdampfer
- 6: Steuerung
- 7: Extra-Verdampfer
- 8: Ventil
- 9: zweiter Kühlkreislauf
- 10: Kompressor
- 11: Zusatzschaltung
- 12: zweiter Verdampfer
- 13: Kondensator
- 14: Filtertrockner
- 15: Drossel
- 16: Solarmodul
- 17: Leitung
- 18: Steuerleitungen
- 19: erste Steuerleitung
- 20: zweite Steuerleitung
- 21: dritte Steuerleitung

- Tₐᵢᵣ: Kühlraumtemperatur
- T_{SET}: Temperaturvergleichswert
- T_{buffer}: Pufferspeichertemperatur
- SET: Temperatursollwert
- d_{SET}: Korrekturwert
- t₀: vorgegebener Zeitraum
- t: Zeit
- n: Schritte
- C: Kompressorschaltung
- V: Ventilschaltung

## Patentansprüche

1. Kühlvorrichtung (1), mit wenigstens einem regenerativ betriebenen primären Kühlkreislauf (2), insbesondere einen solarbetriebenen Kühlkreislauf, wobei der Kühlkreislauf (2) wenigstens einen Kompressor (3), wenigstens einen Kondensator (4), wenigstens einen Verdampfer (5), wenigstens einen Kühlraum, wenigstens einen Temperatursensor zur Messung der Kühlraumtemperatur (Tₐᵢᵣ) im Kühlraum, und eine Steuerung (6) aufweist, wobei in der Steuerung (6) ein Temperatursollwert (SET) des Kühlraums und ein Temperaturvergleichswert (T_{SET)} hinterlegbar sind,
wobei die Kühlung des Kühlraums durch die Steuerung (6) unterbrechbar ist,
und der Temperaturvergleichswert (T_{SET}) durch die Steuerung (6) in Abhängigkeit der Zeit und/oder der Kühlraumtemperatur (Tₐᵢᵣ) veränderbar ist, wobei der Temperaturvergleichswert (T_{SET}) beim Anschalten der Steuerung dem Temperatursollwert (SET) entspricht, und die Steuerung (6) die Kühlung des Kühlraums unterbricht, wenn die tatsächliche Kühlraumtemperatur (Tₐᵢᵣ) den Temperaturvergleichswert (T_{SET)} erreicht hat,
**dadurch gekennzeichnet, dass,**
die Steuerung (6) den Temperaturvergleichswert (T_{SET}) nach einem vorgegebenen Zeitraum (t₀) um einen hinterlegten Korrekturwert (d_{SET}) reduziert, sofern die tatsächliche Kühlraumtemperatur (Tₐᵢᵣ) nicht innerhalb des vorgegebenen Zeitraums (t₀) den Temperaturvergleichswert (T_{SET}) erreicht hat,
wobei die Steuerung den Kompressor (3) beim Unterschreiten des Temperaturvergleichswerts (T_{SET}) durch die tatsächliche Kühlraumtemperatur (Tₐᵢᵣ) um einen Hysteresenwert (HW) abschaltet, und
wobei die Steuerung (6) den Kompressor (3) beim Überschreiten des Temperaturvergleichswerts (T_{SET}) durch die tatsächliche Kühlraumtemperatur (Tₐᵢᵣ) um den Hysteresenwert (HW) anschaltet.

2. Kühlvorrichtung (1) nach Anspruch 1,
**dadurch gekennzeichnet, dass**
die Kühlvorrichtung (1) einen zweiten Kühlkreislauf (9) mit einem zweiten Kompressor (10) zur Kühlung eines zweiten Kühlraums aufweist, wobei der zweite Kompressor (10) über einen Schalter mit Energie versorgbar ist.

3. Kühlvorrichtung (1) nach Anspruch 1 oder 2,
**dadurch gekennzeichnet, dass**
die Kühlvorrichtung (1) eine Zusatzschaltung (11) aufweist, wobei die Steuerung (6) über die Zusatzschaltung (11) mit Energie versorgbar ist.

4. Kühlvorrichtung (1) nach Anspruch 3,
**dadurch gekennzeichnet, dass**
die Zusatzschaltung (11) einen Gleichstromwandler aufweist.

5. Kühlvorrichtung (1) nach Anspruch 3 oder 4,
**dadurch gekennzeichnet, dass**
die Zusatzschaltung (11) wenigstens einen Kondensator aufweist.

6. Kühlvorrichtung (1), mit wenigstens einem regenerativ betriebenen primären Kühlkreislauf (2), insbesondere einen solarbetriebenen Kühlkreislauf, wobei der Kühlkreislauf (2) wenigstens einen Kompressor (3), wenigstens einen Kondensator (4), wenigstens einen Verdampfer (5), wenigstens einen Kühlraum, wenigstens einen Temperatursensor zur Messung der Kühlraumtemperatur (Tₐᵢᵣ) im Kühlraum, und eine Steuerung (6) aufweist, wobei in der Steuerung (6) ein Temperatursollwert (SET) des Kühlraums und ein Temperaturvergleichswert (T_{SET}) hinterlegbar sind,
die Kühlung des Kühlraums durch die Steuerung (6) unterbrechbar ist,
und der Temperaturvergleichswert (T_{SET}) durch die Steuerung (6) in Abhängigkeit der Zeit und/oder der Kühlraumtemperatur (Tₐᵢᵣ) veränderbar ist, wobei der Temperaturvergleichswert (Tₛₑₜ) beim Anschalten der Steuerung dem Temperatursollwert (SET) entspricht, und die Steuerung (6) die Kühlung des Kühlraums unterbricht, wenn die tatsächliche Kühlraumtemperatur (Tₐᵢᵣ) den Temperaturvergleichswert (Tₛₑₜ) erreicht hat, **dadurch gekennzeichnet, dass** der primäre Kühlkreislauf (2) wenigstens einen Extra-Kühlraum und wenigstens einen dem Extra-Kühlraum zugeordneten Extra-Verdampfer (7) aufweist, wobei der Extra- Verdampfer (7) über ein Ventil (8) am primären Kühlkreislauf (2) angeschlossen ist, und die Kühlung des Kühlraums durch Schaltung des Ventils (8) unterbrechbar ist,
wobei das Ventil beim Unterschreiten des Temperaturvergleichswerts (T_{SET)} durch die tatsächliche Kühlraumtemperatur (Tₐᵢᵣ) um einen Hysteresenwert (HW) geschaltet wird,
das Ventil beim Überschreiten des Temperaturvergleichswerts (T_{SET)} durch die tatsächliche Kühlraumtemperatur (Tₐᵢᵣ) um den Hysteresenwert (HW) geschaltet wird, und
der Temperaturvergleichswert (T_{SET)} schrittweise (n) um einen Betrag des hinterlegten Korrekturwerts (d_{SET}/n) angehoben wird, bis der Temperaturvergleichswert (T_{SET}) dem Temperatursollwert (SET) entspricht, wobei der Temperaturvergleichswert (T_{SET)} bei einer Schaltung des Ventils um den nächsten Schritt (d_{SET}/n) erhöht wird.

7. Verfahren zur Steuerung einer Kühlvorrichtung nach einem der vorhergehenden Ansprüche 1 bis 5, wobei der Temperaturvergleichswert (T_{SET)} beim Anschalten der Steuerung dem Temperatursollwert (SET) entspricht, und die Kühlung des Kühlraums unterbrochen wird wenn die tatsächliche Kühlraumtemperatur (Tₐᵢᵣ) den Temperaturvergleichswert (T_{SET}) erreicht hat,
**dadurch gekennzeichnet, dass,** der Temperaturvergleichswert (T_{SET}) nach einem vorgegebenen Zeitraum (t₀) um einen hinterlegten Korrekturwert (d_{SET}) reduziert wird, sofern die tatsächliche Kühlraumtemperatur (Tₐᵢᵣ) nicht innerhalb des vorgegebenen Zeitraums (t₀) den Temperaturvergleichswert (T_{SET}) erreicht hat, wobei der Kompressor beim Unterschreiten des Temperaturvergleichswerts (T_{SET}) durch die tatsächliche Kühlraumtemperatur (Tₐᵢᵣ) um einen Hysteresenwert (HW) abgeschaltet wird und der Kompressor beim Überschreiten des Temperaturvergleichswerts (T_{SET}) durch die tatsächliche Kühlraumtemperatur (Tₐᵢᵣ) um den Hysteresenwert (HW) angeschaltet wird.

8. Verfahren nach Anspruch 7,
**dadurch gekennzeichnet, dass**
der Temperaturvergleichswert (T_{SET}) schrittweise (n) um einen Betrag des hinterlegten Korrekturwerts (d_{SET}/n) angehoben wird, bis der Temperaturvergleichswert (T_{SET}) dem Temperatursollwert (SET) entspricht, wobei der Temperaturvergleichswert (T_{SET}) bei einer Abschaltung des Kompressors um den nächsten Schritt (d_{SET}/n) erhöht wird.

9. Verfahren nach einem der Ansprüche 7 oder 8,
**dadurch gekennzeichnet, dass**
der zweite Kompressor über einen Schalter mit Energie versorgt wird.

10. Verfahren nach Anspruch 9,
**dadurch gekennzeichnet, dass**
der zweite Kompressor mit Energie versorgt wird, wenn der Kompressor des primären Kühlkreislaufs abgeschaltet ist.

11. Verfahren nach Anspruch 9 oder 10,
**dadurch gekennzeichnet, dass**
der zweite Kompressor und der Kompressor des primären Kühlkreislaufs bei ausreichender Energie simultan mit Energie versorgt werden.

12. Verfahren nach einem der vorhergehenden Ansprüche 7 bis 11,
**dadurch gekennzeichnet, dass**
die Ausgangsspannung der Zusatzschaltung durch den Gleichstromwandler unabhängig von der Eingangsspannung konstant gehalten wird.

13. Verfahren nach einem der vorhergehenden Ansprüche 7 bis 12,
**dadurch gekennzeichnet, dass**
eine Abschaltung der Steuerung über einen kritischen Zeitraum durch den wenigstens einen Kondensator der Zusatzschaltung verhindert wird.

14. Verfahren nach einem der vorhergehenden Ansprüche 7 bis 13,
**dadurch gekennzeichnet, dass**
beim Anschalten der Steuerung der Temperaturvergleichswert (T_{SET}) auf den Temperatursollwert (SET) gesetzt wird.

15. Verfahren zur Steuerung einer Kühlvorrichtung nach Anspruch 6,
wobei der Temperaturvergleichswert (T_{SET}) beim Anschalten der Steuerung dem Temperaturstellwert (SET) entspricht, und die Kühlung des Kühlraums unterbrochen wird wenn die tatsächliche Kühlraumtemperatur (Tₐᵢᵣ) den Temperaturvergleichswert (T_{SET}) erreicht hat,
**dadurch gekennzeichnet, dass**
der Temperaturvergleichswert (T_{SET}) nach einem vorgegebenen Zeitraum (t₀) um einen hinterlegten Korrekturwert (d_{SET}) reduziert wird, sofern die tatsächliche Kühlraumtemperatur (Tₐᵢᵣ) nicht innerhalb des vorgegebenen Zeitraums (t₀) den Temperaturvergleichswert (T_{SET}) erreicht hat,
wobei das Ventil beim Unterschreiten des Temperaturvergleichswerts (T_{SET}) durch die tatsächliche Kühlraumtemperatur (Tₐᵢᵣ) um einen Hysteresenwert (HW) geschaltet wird, das Ventil beim Überschreiten des Temperaturvergleichswerts (T_{SET}) durch die tatsächliche Kühlraumtemperatur (Tₐᵢᵣ) um den Hysteresenwert (HW) geschaltet wird, und
der Temperaturvergleichswert (T_{SET}) schrittweise (n) um einen Betrag des hinterlegten Korrekturwerts (d_{SET}/n) angehoben wird, bis der Temperaturvergleichswert (T_{SET}) dem Temperatursollwert (SET) entspricht, wobei der Temperaturvergleichswert (T_{SET}) bei einer Schaltung des Ventils um den nächsten Schritt (d_{SET}/n) erhöht wird.

## Claims

1. A cooling device (1) comprising at least one regeneratively operating primary cooling circuit (2), in particular a solar-powered cooling circuit, the cooling circuit (2) comprising at least one compressor, at least one condenser (4), at least one evaporator (5), at least one cooling chamber, at least one temperature sensor for measuring the temperature of the cooling chamber (Tₐᵢᵣ) in said cooling chamber, and a control device (6), the control device (6) being capable of storing a set temperature value (SET) of the cooling chamber and a comparison temperature value (T_{SET}),
the cooling of the cooling chamber being capable of being interrupted by the control device (6),
and the comparison temperature value (T_{SET}) being adjustable by the control device (6) as a function of time and/or temperature of the cooling chamber (Tₐᵢᵣ), the comparison temperature value (T_{SET}) corresponding to the set temperature (SET) when the control device is started, and the control device interrupting the cooling of the cooling chamber when the actual temperature of the cooling chamber (Tₐᵢᵣ) has reached the comparison temperature value (T_{SET}),
**characterized in that**
the control device (6) reduces the comparison temperature value (T_{SET}) after a predetermined time period (t₀) by a stored correction value (d_{SET}), as long as the actual temperature of the cooling chamber (Tₐᵢᵣ) has not reached the value of the comparison temperature (T_{SET}) within the time period (t₀),
the control device switches the compressor (3) off, when the actual temperature of the cooling chamber (Tₐᵢᵣ) falls below the comparison temperature value (T_{SET}) by a hysteresis value (HW) and
the control device (6) switches the compressor (3) on, when the actual temperature of the cooling chamber (Tₐᵢᵣ) rises beyond the comparison temperature value (T_{SET}) by a hysteresis value (HW).

2. Cooling device (1) according to claim 1,
**characterized in that**
the cooling device (1) comprises a second cooling circuit (9) comprising a second compressor (10) for cooling a second cooling chamber, the said second compressor (10) being capable of being supplied with energy via a switch.

3. Cooling device (1) according to claim 1 or 2,
**characterized in that**
the cooling device (1) comprises an additional circuit (11), the control device (6) being capable of being supplied with power via the additional circuit (11).

4. Cooling device (1) according to claim 3,
**characterized in that**
the additional circuit (11) comprises a DC-DC converter.

5. Cooling device (1) according to claim 3 or 4,
**characterized in that**
the additional circuit (11) has at least one capacitor.

6. A cooling device (1) comprising at least one regeneratively operating primary cooling circuit (2), in particular a solar cooling circuit, the cooling circuit (2) comprising at least one compressor (3), at least one condenser (4), at least one evaporator (5), at least one cooling chamber, at least one temperature sensor for measuring the temperature of the cooling chamber (Tₐᵢᵣ) in said cooling chamber, a control device (6), the control device (6) being capable of storing a set temperature value (SET) of the cooling chamber and a comparison temperature value (T_{SET}),
the cooling of the cooling chamber being capable of being interrupted by the control device (6),
and the comparison temperature value (T_{SET}) being adjustable by the control device (6) as a function of time and/or temperature of the cooling chamber (Tₐᵢᵣ), the comparison temperature value (T_{SET}) corresponding to the set temperature (SET) when the control device is started, and the control device interrupting cooling of the cooling chamber when the actual temperature of the cooling chamber (Tₐᵢᵣ) has reached the comparison temperature value (T_{SET}),
**characterized in that**
the primary cooling circuit (2) comprises at least one additional cooling chamber and at least one additional evaporator (7) associated with the additional cooling chamber, the additional evaporator (7) being connected via a valve (8) to the primary cooling circuit (2), and the cooling of the cooling chamber being capable of being interrupted by actuation of the valve (8), the valve being actuated when the actual temperature of the cooling chamber falls below the comparison temperature value (T_{SET}) by a hysteresis value (HW),
the valve being actuated when the actual temperature of the cooling chamber (Tₐᵢᵣ) rises beyond the comparison temperature value (T_{SET}) by hysteresis value (HW), and
the comparison temperature value (T_{SET}) being stepwise (n) increased by an amount corresponding to the stored correction value (d_{SET}/n) until the temperature comparison value (T_{SET}) corresponds to the set temperature (SET), the comparison temperature value (T_{SET}) being incremented by the next step (d_{SET}/n) upon actuation of the valve.

7. A method for controlling a cooling device according to any of Claims 1 to 5, wherein the comparison temperature value (T_{SET}) corresponds to the set temperature (SET) when the control device is started, and the cooling of the cooling chamber is interrupted when the actual temperature of the cooling chamber (Tₐᵢᵣ) has reached the comparison temperature value (T_{SET}), **characterized in that** the comparison temperature value (T_{SET}) is reduced by a stored correction value (d_{SET}) after a predetermined time period (t₀), as long as the actual temperature of the cooling chamber (Tₐᵢᵣ) has not reached the value of the comparison temperature (T_{SET}) within the set time period (t₀), the compressor (3) being disconnected when the actual temperature of the cooling chamber (Tₐᵢᵣ) falls below the comparison temperature value (T_{SET}) by hysteresis value (HW), and the compressor (3) being started when the actual temperature of the cooling chamber (Tₐᵢᵣ) rises beyond the comparison temperature value (T_{SET}) by hysteresis value (HW).

8. Method according to claim 7,
**characterized in that**
the comparison temperature value (T_{SET}) is stepwise (n) increased by an amount corresponding to the stored correction value (d_{SET}/n) until the temperature comparison value (T_{SET}) corresponds to the set temperature (SET), the comparison temperature value (T_{SET}) being incremented by the next step (d_{SET}/n) when the compressor is stopped.

9. Method according to any of Claims 7 or 8,
**characterized in that**
the second compressor is supplied with power via a switch.

10. Method according to claim 9,
**characterized in that**
the second compressor is supplied with power when the compressor of the primary cooling circuit is disconnected.

11. Method according to claim 9 or 10,
**characterized in that**
the second compressor and the compressor of the primary cooling circuit are simultaneously supplied with energy when sufficient energy is available.

12. Method according to any of Claims 7 to 11,
**characterized in that**
the output voltage of the additional circuit is kept constant by the DC-DC converter, independently of the input voltage.

13. Method according to any of Claims 7 to 12,
**characterized in that**
the switching off of the control device is prevented during a critical time period by means of the capacitor of the additional circuit.

14. Method according to any of Claims 7 to 13
**characterized in that**,
the comparison temperature value (T_{SET}) is set to the set temperature (SET) when the control device is started.

15. Method for controlling a cooling circuit according to claim 6,
wherein the value of the comparison temperature (T_{SET}) corresponds to the set temperature value (SET) when the control device is started, and cooling of the cooling chamber is interrupted when the actual temperature of the cooling chamber (Tₐᵢᵣ) has reached the comparison temperature value (T_{SET}), **characterized in that**
after a predetermined time period (t₀), comparison temperature value (T_{SET}) is reduced by a stored correction value (d_{SET}), as long as the actual temperature of the cooling chamber (Tₐᵢᵣ) has not reached the value of the comparison temperature (T_{SET}) within the set time period (t₀),
the valve being actuated when the actual temperature of the cooling chamber (Tₐᵢᵣ) falls below the comparison temperature value (T_{SET}) by a hysteresis value (HW),
the valve being actuated when the actual temperature of the cooling chamber (Tₐᵢᵣ) rises beyond the comparison temperature value (T_{SET}) by the hysteresis value (HW), and
the comparison temperature value (T_{SET}) being stepwise (n) increased by an amount corresponding to the stored correction value (d_{SET}/n) until the comparison temperature value (T_{SET}) corresponds to the set temperature (SET), the comparison temperature value (T_{SET}) being incremented by the following step (d_{SET}/n) upon actuation of the valve.

## Revendications

1. Dispositif de refroidissement (1) comportant au moins un circuit de refroidissement primaire (2) fonctionnant de manière régénérative, notamment un circuit de refroidissement fonctionnant à l'énergie solaire, le circuit de refroidissement (2) comportant au moins un compresseur (3), au moins un condenseur (4), au moins un évaporateur (5), au moins une chambre de refroidissement, au moins une sonde de température pour la mesure de la température de la chambre de refroidissement (Tₐᵢᵣ) dans ladite chambre de refroidissement, et une commande (6), la commande (6) pouvant stocker une valeur de consigne de la température (SET) de la chambre de refroidissement et une valeur de température de comparaison (T_{SET}),
le refroidissement de la chambre de refroidissement étant interrompable par la commande (6)
et la valeur de température de comparaison (T_{SET}) étant modifiable par la commande (6) en fonction du temps et/ou de la température de la chambre de refroidissement (Tₐᵢᵣ), la valeur de température de comparaison (T_{SET}) correspondant à la température de consigne (SET) lors de la mise en route de la commande, et la commande interrompant le refroidissement de la chambre de refroidissement lorsque la température réelle de la chambre de refroidissement (Tₐᵢᵣ) a atteint la valeur de température de comparaison (T_{SET}),
**caractérisé en ce que**
la commande (6) réduit la valeur de température de comparaison (T_{SET}) après une période de temps prédéterminée (t₀) d'une valeur de correction mémorisée (d_{SET}), dans la mesure où la température réelle de la chambre de refroidissement (Tₐᵢᵣ) n'a pas atteint la valeur de la température de comparaison (T_{SET}) endéans la période de temps (t₀),
la commande arrête le compresseur (3) lorsque la température réelle de la chambre de refroidissement (Tair) tombe à une valeur inférieure d'une valeur d'hystérésis (HW) à la valeur de température de comparaison (T_{SET}), et
la commande (6) met en marche le compresseur (3) lorsque la température réelle de la chambre de refroidissement (Tₐᵢᵣ) monte à une valeur supérieure d'une valeur d'hystérésis (HW) à la valeur de température de comparaison (T_{SET}).

2. Dispositif de refroidissement (1) selon la revendication 1
**caractérisé en ce que**
le dispositif de refroidissement (1) comporte un deuxième circuit de refroidissement (9) comportant un deuxième compresseur (10) pour le refroidissement d'une deuxième chambre de refroidissement, ledit deuxième compresseur (10) étant apte à être alimenté en énergie via un interrupteur.

3. Dispositif de refroidissement (1) selon la revendication 1 ou 2
**caractérisé en ce que**
le dispositif de refroidissement (1) comporte un circuit supplémentaire (11), la commande (6) étant capable d'être alimentée en énergie via le circuit supplémentaire (11).

4. Dispositif de refroidissement (1) selon la revendication 3
**caractérisé en ce que**
le circuit supplémentaire (11) comporte un transformateur pour courant continu.

5. Dispositif de refroidissement (1) selon la revendication 3 ou 4
**caractérisé en ce que**
le circuit supplémentaire (11) comporte au moins condensateur.

6. Dispositif de refroidissement (1) comportant au moins un circuit de refroidissement primaire (2) fonctionnant de manière régénérative, notamment un circuit de refroidissement fonctionnant à l'énergie solaire, le circuit de refroidissement (2) comportant au moins un compresseur (3), au moins un condenseur (4), au moins un évaporateur (5), au moins une chambre de refroidissement, au moins une sonde de température pour la mesure de la température de la chambre de refroidissement (Tₐᵢᵣ) dans ladite chambre de refroidissement, et une commande (6), la commande (6) pouvant stocker une valeur de consigne de la température (SET) de la chambre de refroidissement et une valeur de température de comparaison (T_{SET}),
le refroidissement de la chambre de refroidissement étant interrompable par la commande (6)
et la valeur de température de comparaison (T_{SET}) étant modifiable par la commande (6) en fonction du temps et/ou de la température de la chambre de refroidissement (Tₐᵢᵣ), la valeur de température de comparaison (T_{SET}) correspondant à la température de consigne (SET) lors de la mise en route de la commande, et la commande interrompant le refroidissement de la chambre de refroidissement lorsque la température réelle de la chambre de refroidissement (Tₐᵢᵣ) a atteint la valeur de température de comparaison (T_{SET}),
**caractérisé en ce que**
le circuit de refroidissement primaire (2) comporte au moins une chambre de refroidissement supplémentaire et au moins un évaporateur supplémentaire (7) associé à ladite chambre de refroidissement supplémentaire, l'évaporateur supplémentaire (7) étant raccordé par l'intermédiaire d'une vanne (8) au circuit de refroidissement primaire (2), et le refroidissement de la chambre de refroidissement étant interrompable par l'actionnement de la vanne (8), la vanne étant actionnée lorsque la température réelle de la chambre de refroidissement (Tair) tombe à une valeur inférieure d'une valeur d'hystérésis (HW) à la valeur de température de comparaison (T_{SET}), la vanne étant actionnée lorsque la température réelle de la chambre de refroidissement (Tₐᵢᵣ) monte à une valeur supérieure d'une valeur d'hystérésis (HW) à la valeur de température de comparaison (T_{SET}), et la valeur de température de comparaison (T_{SET}) étant relevée par étapes (n) d'un montant correspondant à la valeur de correction mémorisée (d_{SET}/n) jusqu'à ce que la valeur de comparaison de température (T_{SET}) correspond à la température de consigne (SET), la valeur de température de comparaison (T_{SET}) étant incrémentée de l'étape suivante (d_{SET}/n) lors de l'actionnement de la vanne.

7. Procédé de commande d'un dispositif de refroidissement selon l'une des revendications 1 à 5, dans lequel la valeur de température de comparaison (T_{SET}) correspond à la température de consigne (SET) lors de la mise en route de la commande, et la commande interromp le refroidissement de la chambre de refroidissement lorsque la température réelle de la chambre de refroidissement (Tₐᵢᵣ) a atteint la valeur de température de comparaison (T_{SET}),
**caractérisé en ce que** la valeur de température de comparaison (T_{SET}) est réduite après une période de temps prédéterminée (t₀) d'une valeur de correction mémorisée (d_{SET}), dans la mesure où la température réelle de la chambre de refroidissement (Tₐᵢᵣ) n'a pas atteint la valeur de la température de comparaison (T_{SET}) endéans la période de temps (t₀), le compresseur (3) étant débranché lorsque la température réelle de la chambre de refroidissement (Tair) tombe à une valeur inférieure d'une valeur d'hystérésis (HW) à la valeur de température de comparaison (T_{SET}), et le compresseur (3) étant mis en marche lorsque la température réelle de la chambre de refroidissement (Tₐᵢᵣ) monte à une valeur supérieure d'une valeur d'hystérésis (HW) à la valeur de température de comparaison (T_{SET}).

8. Procédé selon la revendication 7
**caractérisé en ce que**
la valeur de température de comparaison (T_{SET}) est relevée par étapes (n) d'un montant correspondant à la valeur de correction mémorisée (d_{SET}/n) jusqu'à ce que la valeur de comparaison de température (T_{SET}) correspond à la température de consigne (SET), la valeur de température de comparaison (T_{SET}) étant incrémentée de l'étape suivante (d_{SET}/n) lors de l'arrêt du compresseur.

9. Procédé selon l'une des revendications 7 ou 8
**caractérisé en ce que**
le deuxième compresseur est alimenté en énergie via un interrupteur.

10. Procédé selon la revendication 9
**caractérisé en ce que**
le deuxième compresseur est alimenté en énergie lorsque le compresseur du circuit de refroidissement primaire est déconnecté.

11. Procédé selon la revendication 9 ou 10
**caractérisé en ce que**
le deuxième compresseur et le compresseur du circuit de refroidissement primaire sont simultanément alimentés en énergie lorsque celle-ci est suffisante.

12. Procédé selon l'une des revendications 7 à 11
**caractérisé en ce que**
la tension de sortie du circuit supplémentaire est maintenue constante par le transformateur pour courant continu, indépendamment de la tension à l'entrée.

13. Procédé selon l'une des revendications 7 à 12
**caractérisé en ce**
**qu'**on empêche l'arrêt de la commande pendant une période de temps critique à l'aide du condensateur du circuit supplémentaire.

14. Procédé selon l'une des revendications 7 à 13
**caractérisé en ce que**,
la valeur de température de comparaison (T_{SET}) est réglée sur la valeur de température de consigne (SET) lors du démarrage de la commande.

15. Procédé pour la commande d'un circuit de refroidissement selon la revendication 6, dans lequel la valeur de la température de comparaison (T_{SET}) correspond à la valeur de température de consigne (SET) lors de la mise en route de la commande, et la refroidissement de la chambre de refroidissement est interrompu lorsque la température réelle de la chambre de refroidissement (Tₐᵢᵣ) a atteint la valeur de température de comparaison (T_{SET}),
**caractérisé en ce**
**qu'**on réduit (T_{SET}) après une période de temps prédéterminée (t₀) d'une valeur de correction mémorisée (d_{SET}), dans la mesure où la température réelle de la chambre de refroidissement (Tₐᵢᵣ) n'a pas atteint la valeur de la température de comparaison (T_{SET}) endéans la période de temps (t₀),
la vanne étant actionnée lorsque la température réelle de la chambre de refroidissement (Tair) tombe à une valeur inférieure d'une valeur d'hystérésis (HW) à la valeur de température de comparaison (T_{SET}),
la vanne étant actionnée lorsque la température réelle de la chambre de refroidissement (Tₐᵢᵣ) monte à une valeur supérieure d'une valeur d'hystérésis (HW) à la valeur de température de comparaison (T_{SET}), et
la valeur de température de comparaison (T_{SET}) étant relevée par étapes (n) d'un montant correspondant à la valeur de correction mémorisée (d_{SET}/n) jusqu'à ce que la valeur de température de comparaison (T_{SET}) correspond à la température de consigne (SET), la valeur de température de comparaison (T_{SET}) étant incrémentée de l'étape suivante (d_{SET}/n) lors de l'actionnement de la vanne.
